# EUROPÄISCHE PATENTANMELDUNG

(11) **EP 3 668 278 A1**
(43) Veröffentlichungstag der Anmeldung: **17.06.2020**
(21) Anmeldenummer: 19214370.9
(22) Anmeldetag: 09.12.2019
(51) Int. Cl.: H05B 45/58, H05B 45/54

(54) **SCHALTUNGSANORDNUNG UND VERFAHREN ZUR ERKENNUNG EINES KURZSCHLUSSES IN EINER LEUCHTEINHEIT**

(30) Priorität: 13.12.2018 DE 102018132077
(71) Anmelder: HELLA GMBH & CO. KGAA, 59552 Lippstadt (DE)
(72) Erfinder: FELDGEN, Michael, 59555 Lippstadt (DE)

(57) **Zusammenfassung**

Die vorliegende Erfindung betrifft eine Schaltungsanordnung (1) für ein Fahrzeug (11) zur Erkennung eines Kurzschlusses in einer Leuchteinheit (2) mit mehreren in Reihe geschalteten Leuchtdioden (3), aufweisend einen Shunt-Regler (4), eine Einstelleinheit (7) zum Einstellen des Shunt-Reglers (4) auf eine Referenzspannung (U2), eine Spannungsermittlungseinheit (5) zur Ermittlung einer Stringspannung (U1) der in Reihe geschalteten Leuchtdioden (3) sowie der entsprechend eingestellten Referenzspannung (U2) des Shunt-Reglers (4), und eine Erkennungseinheit (6) zur Erkennung eines Kurzschlusses in der Leuchteinheit (2) anhand der Stringspannung (U1) und der Referenzspannung (U2). Ferner betrifft die Erfindung ein entsprechendes Verfahren zur Erkennung eines Kurzschlusses, ein Computerprogramm (10), ein Speichermittel sowie ein Fahrzeug (11).

## Beschreibung

Die vorliegende Erfindung betrifft eine Schaltungsanordnung sowie ein Verfahren zum Erkennen eines Kurzschlusses in einer Leuchteinheit. Zudem betrifft die Erfindung ein Computerprogramm zum Erkennen eines Kurzschlusses in einer Leuchteinheit, ein Speichermittel mit einem darauf gespeicherten Computerprogramm sowie ein Fahrzeug, in welchem ein Kurzschluss in einer Leuchteinheit erkannt werden kann.

Die Komplexität von Lichtschaltungen im Automobilbereich nimmt ständig zu. Aktuelle Beleuchtungssysteme sind nicht mehr auf einzelne Leuchtmittel beschränkt, sondern weisen häufig mehrere Leuchtmittel auf, die beispielsweise in Form von mehreren Leuchtdioden in Reihe geschaltet die erforderliche oder gewünschte Leuchtwirkung erzielen. D.h., zur Erzeugung der gewünschten Lichtfunktion werden mittlerweile mehrere Leuchtdioden zueinander in Reihe geschaltet und über eine Konstantstromquelle mit einer gemeinsamen Versorgungsspannung versorgt.

Wie in der deutschen Patentanmeldung DE 10 2008 008 217 A1 beschrieben, kommt ein Ausfall von Leuchtmitteln in Fahrzeugscheinwerfern bzw. Lichteinheiten für Kraftfahrzeuge üblicherweise durch Unterbrechung zu Stande, etwa bei Lampen mit einem Glühfaden. Auch bei der Verwendung von Leuchtdioden als Lichtquellen liegt in der Regel bei einem Ausfall von einer oder mehreren Leuchtdioden eine Unterbrechung vor. Mit geringerer Wahrscheinlichkeit kann aber auch ein Kurzschluss von einer oder mehreren Leuchtdioden vorliegen.

Von Seiten der Automobilindustrie wird gefordert, auch den Kurzschluss einer einzigen Leuchtiode detektieren zu können, d.h., zu erkennen, wenn in einer Reihenschaltung mit mehreren Leuchtdioden auch nur eine einzige Leuchtdiode einen Kurzschluss aufweist. Durch große Spannungstoleranzen ist es bei einer Reihenschaltung von mehreren Leuchtdioden bei gattungsgemäßen Schaltungsanordnungen allerdings nur schwer und mit entsprechend großem Aufwand, d. h., nur mittels aufwändiger Elektronik, möglich, einen Kurzschluss von einer einzigen Leuchtdiode durch Gesamtspannungsüberwachung einer Reihenschaltung der Leuchtdioden zu erfassen. Ein gattungsgemäßes Verfahren zur Ermittlung eines Kurzschlusses kann beispielsweise der DE 10 2014 112 176 A1 entnommen werden.

Gemäß der DE 10 2008 008 217 A1 wird eine Schaltungsanordnung zur Erkennung eines Kurzschlusses von einer oder mehreren Leuchtdioden vorgeschlagen, wobei zwei oder mehr Leuchtdioden zur Realisierung von zumindest einer Lichtfunktion für einen Scheinwerfer bzw. eine Lichteinheit eines Kraftfahrzeuges vorgesehen sind, und die Leuchtdioden zueinander in Reihe geschaltet sind und über eine Konstantstromquelle an einer Versorgungsspannungsquelle liegen.

Mit Blick auf den verfügbaren Stand der Technik besteht weiterhin der Wunsch, nach einem noch einfacheren und/oder genauer arbeitenden System zur Erkennung eines Kurzschlusses in einer gattungsgemäßen Leuchteinheit.

Mithin ist es Aufgabe der vorliegenden Erfindung, eine Schaltungsanordnung zu schaffen, mittels welcher auf einfache und zuverlässige Weise ein Kurzschluss in einer Leuchteinheit mit einer Reihenschaltung von mehreren Leuchtdioden erkannt werden kann. Ferner ist es Aufgabe der Erfindung, ein entsprechendes Verfahren und ein Computerprogrammprodukt zur einfachen und zuverlässigen Erkennung eines Kurzschlusses in einer solchen Leuchteinheit bereitzustellen. Darüber hinaus ist es Aufgabe der Erfindung, ein Speichermittel, auf welchem ein solches Computerprogrammprodukt gespeichert ist, sowie ein Fahrzeug mit einer darin ausgestalteten Schaltungsanordnung, zur einfachen und zuverlässigen Erkennung eines Kurzschlusses in einer solchen Leuchteinheit, zu finden.

Die voranstehende Aufgabe wird durch die Patentansprüche gelöst. Insbesondere wird die voranstehende Aufgabe durch die Schaltungsanordnung gemäß Anspruch 1, das Verfahren gemäß Anspruch 5, das Computerprogrammprodukt gemäß Anspruch 9, das Speichermittel gemäß Anspruch 10 sowie das Fahrzeug gemäß Anspruch 11 gelöst. Weitere Vorteile der Erfindung ergeben sich aus den Unteransprüchen, der Beschreibung und den Figuren. Dabei gelten Merkmale, die im Zusammenhang mit der Schaltungsanordnung beschrieben sind, selbstverständlich auch im Zusammenhang mit dem erfindungsgemäßen Verfahren, dem erfindungsgemäßen Computerprogrammprodukt, dem erfindungsgemäßen Speichermittel, dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird eine Schaltungsanordnung für ein Fahrzeug zur Erkennung eines Kurzschlusses in einer Leuchteinheit mit mehreren in Reihe geschalteten Leuchtdioden, zur Verfügung gestellt. Die Schaltungsanordnung weist ferner einen Shunt-Regler und eine Einstelleinheit zum Einstellen des Shunt-Reglers auf eine Referenzspannung, eine Spannungsermittlungseinheit zur Ermittlung einer Stringspannung der in Reihe geschalteten Leuchtdioden sowie der entsprechend eingestellten Referenzspannung des Shunt-Reglers, auf. Außerdem weist die Schaltungsanordnung eine Erkennungseinheit zur Erkennung eines Kurzschlusses in der Leuchteinheit anhand der Stringspannung und der Referenzspannung auf.

Mit Hilfe der Schaltungsanordnung kann bereits ein einzelner Kurzschluss in der Leuchteinheit zuverlässig und schnell erkannt werden. Dies ist insbesondere durch die Verwendung des erfindungsgemäßen Shunt-Reglers möglich. Bei Versuchen im Rahmen der vorliegenden Erfindung wurde erkannt, dass Standardbauteile in einem Steuergerät, welche bei herkömmlichen Schaltanordnungen verwendet werden, nicht die gewünschte Qualität zur Erkennung eines Kurzschlusses liefern können. Deshalb wurde sich von den bekannten Systemen abgewandt und nach einer Vielzahl von unterschiedlichen Versuchen ein Shunt-Reglers als bevorzugtes Referenzbauteil erkannt. Der Shunt-Regler wird insbesondere in Form eines TL431 oder TL432 verwendet und weist eine Toleranz von ca. 0,5% mit einer Temperaturdrift von ca. 6mV über den gesamten Temperaturbereich auf.

Anhand der Referenzspannung und der Stringspannung kann auf einfache Weise festgestellt werden, ob an der entsprechenden Leuchtdiode ein Kurzschluss vorliegt oder nicht. Weicht die Stringspannung beispielsweise um einen vordefinierbaren Wert von der Referenzspannung ab, kann erkannt werden, dass ein Kurzschluss vorliegt. Liegt ein Unterschied zwischen der Stringspannung und der Referenzspannung in einem vordefinierbaren Rahmen, kann erkannt werden, dass kein Kurzschluss vorliegt. Mithin kann der Kurzschluss anhand eines Vergleichs zwischen der Referenzspannung und der Stringspannung erkannt werden. Hierfür können eine Vergleichseinheit und/oder eine Einheit zum Durchführen des Vergleichs zwischen der Referenzspannung und der Stringspannung entsprechend konfiguriert sein.

Die Erkennungseinheit kann konfiguriert und ausgestaltet sein, die Referenzspannung mit der Stringspannung zu vergleichen, basierend auf dem Vergleich eine Differenzspannung zwischen der Referenzspannung und der Stringspannung zu ermitteln, die ermittelte Differenzspannung mit einer vordefinierbaren Schwellenspannung zu vergleichen und einen Kurzschluss in einer Leuchtdiode zu erkennen, wenn die Differenzspannung größer als der Schwellenwert ist. Unter der Stringspannung kann die Gesamtspannung an allen in Reihe geschalteten Leuchtdioden verstanden werden.

Gemäß einer weiteren Ausführungsform der vorliegenden Erfindung ist es möglich, dass bei einer Schaltungsanordnung die Einstelleinheit zum Einstellen der Referenzspannung anhand der Durchlassspannung von einer der Leuchtdioden konfiguriert ist. D.h., die Referenzspannung wird auf die jeweilige Durchlassspannung der Leuchtdioden angepasst, also auf die Durchlassspannung einer der Leuchtdioden, welche mit der Anzahl der verwendeten Leuchtdioden multipliziert wird, eingestellt und anschließend mit der Stringspannung verglichen bzw. in ein definierbares Verhältnis zur Erkennung des Kurzschlusses gesetzt. Damit kann auf einfache und schnelle Weise die Referenzspannung am Shunt-Regler eingestellt werden.

Weiterhin ist es bei einer erfindungsgemäßen Schaltungsanordnung möglich, dass die Schaltungsanordnung eine Abschalteinheit zum Abschalten der Leuchteinheit anhand der Stringspannung und der Referenzspannung aufweist. Durch die Abschalteinheit kann verhindert werden, dass durch einen Kurzschluss in einer Leuchtdiode bzw. in der Leuchteinheit noch weitere Leuchtdioden und/oder weitere Bauteile der Schaltungsanordnung oder des Fahrzeugs beschädigt oder zerstört werden. Hinsichtlich der Verwendung der Referenzspannung und der Stringspannung gilt das vorstehend zur Erkennung des Kurzschlusses geschriebene in analoger Weise.

Zusätzlich oder alternativ ist es möglich, dass bei einer Schaltungsanordnung gemäß der vorliegenden Erfindung eine Signalausgabeeinheit zur Ausgabe eines Warnsignals zum Abschalten der Leuchteinheit anhand der Stringspannung und der Referenzspannung bereitgestellt ist. Durch das Warnsignal zum Abschalten der Leuchteinheit bzw. die Empfehlung zum Abschalten der Leuchteinheit kann ein Nutzer des Fahrzeugs rechtzeitig eine Reparatur oder einen Austausch der Leuchteinheit veranlassen, bevor die Leuchteinheit ggf. in einer ungünstigen Situation ganz ausfällt. Die Signalausgabeeinheit kann konfiguriert und ausgestaltet sein, das Warnsignal an einen Signalwandler der Schaltungsanordnung oder des Fahrzeugs zur akustischen und/oder optischen Ausgabe des Warnsignals an den Nutzer des Fahrzeugs bzw. der Schaltungsanordnung zu senden.

Gemäß einem weiteren Aspekt der vorliegenden Erfindung wird ein Verfahren zur Erkennung eines Kurzschlusses in einer Leuchteinheit mit mehreren in Reihe geschalteten Leuchtdioden durch eine wie vorstehend beschriebene Schaltungsanordnung zur Verfügung gestellt. Das Verfahren weist die folgenden Schritte auf:
- Einstellen des Shunt-Reglers auf eine Referenzspannung durch die Einstelleinheit,
- Ermitteln einer Stringspannung der in Reihe geschalteten Leuchtdioden sowie der Referenzspannung des Shunt-Reglers durch die Spannungsermittlungseinheit, und
- Erkennen eines Kurzschlusses in der Leuchteinheit anhand der Stringspannung und der Referenzspannung durch die Erkennungseinheit.

Damit bringt das erfindungsgemäße Verfahren die gleichen Vorteile mit sich, wie sie ausführlich mit Bezug auf die erfindungsgemäße Schaltungsanordnung beschrieben worden sind.

Wie vorstehend bereits zur Schaltungsanordnung beschrieben, ist es im Rahmen des Verfahrens weiterhin möglich, dass die Referenzspannung anhand der Durchlassspannung von einer der Leuchtdioden eingestellt wird. Die Leuchteinheit kann anhand der Stringspannung und der Referenzspannung durch eine Abschalteinheit abgeschaltet werden. Anhand der Stringspannung und der Referenzspannung kann ein Warnsignal zum Abschalten der Leuchteinheit durch eine Signalausgabeeinheit ausgegeben werden.

Gemäß einem weiteren Aspekt der Erfindung wird ein Computerprogramm bereitgestellt, das Befehle umfasst, die bei der Ausführung des Computerprogramms durch einen Computer diesen veranlassen, das vorstehend beschriebene Verfahren durchzuführen. Das Computerprogramm kann als computerlesbarer Anweisungscode in jeder geeigneten Programmiersprache wie beispielsweise in JAVA, C++ oder C# implementiert sein. Das Computerprogramm kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie ein Fahrzeugsteuergerät derart programmieren, dass die gewünschten Funktionen ausgeführt werden. Ferner kann das Computerprogramm in einem Netzwerk wie beispielsweise dem Internet bereitgestellt werden bzw. sein, von dem es bei Bedarf von einem Nutzer heruntergeladen werden kann. Das Computerprogramm kann sowohl mittels einer Software, als auch mittels einer oder mehrerer spezieller elektronischer Schaltungen, d.h. in Hardware in Form eines Computerprogrammprodukts, oder in beliebig hybrider Form, d.h. mittels Software-Komponenten und Hardware-Komponenten, realisiert werden bzw. sein.

Zudem wird ein Speichermittel mit einem solchen Computerprogramm, das auf dem Speichermittel gespeichert ist, zur Verfügung gestellt. Das Speichermittel kann als Datenträger in Form eines Speicherstifts, einer Speicherdisc, einer Festplatte oder aber auch eines Steuergerätes oder dergleichen ausgestaltet sein. Darüber hinaus umfasst die vorliegende Erfindung ein Fahrzeug mit wenigstens einer Leuchteinheit und einer wie vorstehend beschriebenen Schaltungsanordnung, die zur Erkennung eines Kurzschlusses in der Leuchteinheit konfiguriert und ausgestaltet ist, wobei die Leuchteinheit in Form eines Fahrzeugscheinwerfers oder in einem Fahrzeugscheinwerfer ausgestaltet ist.

Damit bringen das erfindungsgemäße Computerprogramm, das erfindungsgemäße Speichermittel sowie das erfindungsgemäße Fahrzeug ebenfalls die vorstehend beschriebenen Vorteile mit sich.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigt:
- Fig. 1: eine Schaltungsanordnung gemäß einer bevorzugten Ausführungsform der vorliegenden Erfindung,
- Fig. 2: ein Fahrzeug mit einer wie in Fig. 1 dargestellten Schaltungsanordnung, und
- Fig. 3: ein Flussdiagramm zum Erläutern eines Verfahrens gemäß einer bevorzugten Ausführungsform der vorliegenden Erfindung.

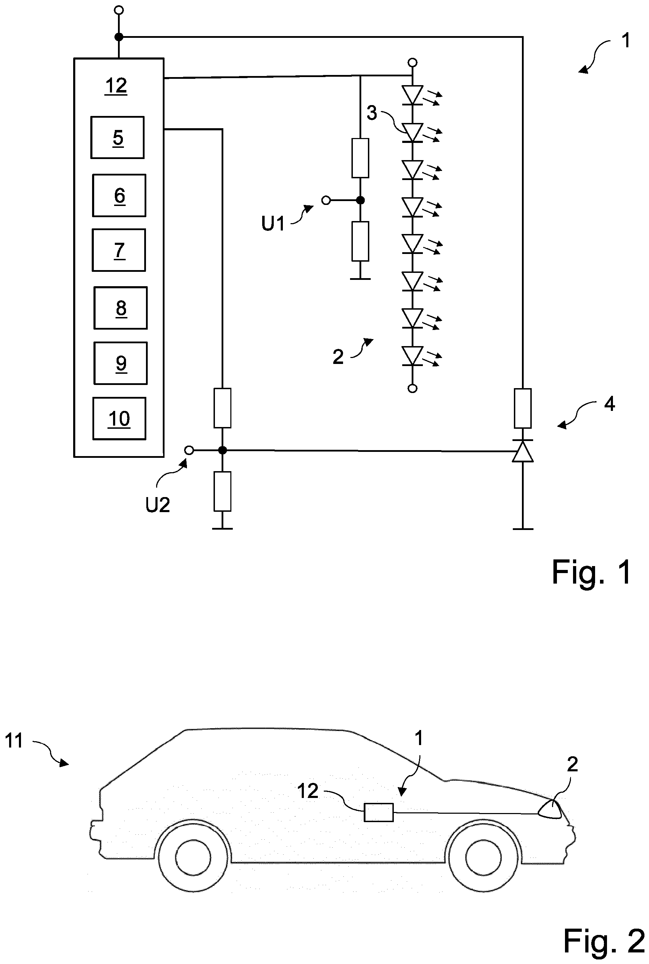

Elemente mit gleicher Funktion und Wirkungsweise sind in den Figuren 1 bis 3 jeweils mit denselben Bezugszeichen versehen.

Fig. 1 zeigt eine Schaltungsanordnung 1 für ein Fahrzeug 11 zur Erkennung eines Kurzschlusses in einer Leuchteinheit 2 mit mehreren in Reihe geschalteten Leuchtdioden 3. D.h., mit der in Fig. 1 dargestellten Schaltungsanordnung 1 kann erkannt werden, wenn bereits an einer einzigen Leuchtdiode 3 der Leuchteinheit 2 ein Kurzschluss vorliegt. Dazu weist die Schaltungsanordnung 1 einen Shunt-Regler 4, eine Einstelleinheit 7 zum Einstellen des Shunt-Reglers 4 auf eine Referenzspannung U2 bzw. zum Einstellen einer Referenzspannung am Shunt-Regler 4, eine Spannungsermittlungseinheit 5 zur Ermittlung einer Stringspannung U1 der in Reihe geschalteten Leuchtdioden 3 sowie der entsprechend eingestellten Referenzspannung U2 des Shunt-Reglers 4, und eine Erkennungseinheit 6 zur Erkennung eines Kurzschlusses in der Leuchteinheit 2 anhand der Stringspannung U1 und der Referenzspannung U2, auf.

Hierbei ist die Einstelleinheit 7 zum Einstellen der Referenzspannung U2 anhand der Durchlassspannung von einer der Leuchtdioden 3 konfiguriert. Die Schaltungsanordnung 1 weist ferner eine Abschalteinheit 8 zum Abschalten der Leuchteinheit 2 anhand der Stringspannung U1 und der Referenzspannung U2 auf. Außerdem weist die Schaltungsanordnung 1 eine Signalausgabeeinheit 9 zur Ausgabe eines Warnsignals zum Abschalten der Leuchteinheit 2 anhand der Stringspannung U1 und der Referenzspannung U2 auf.

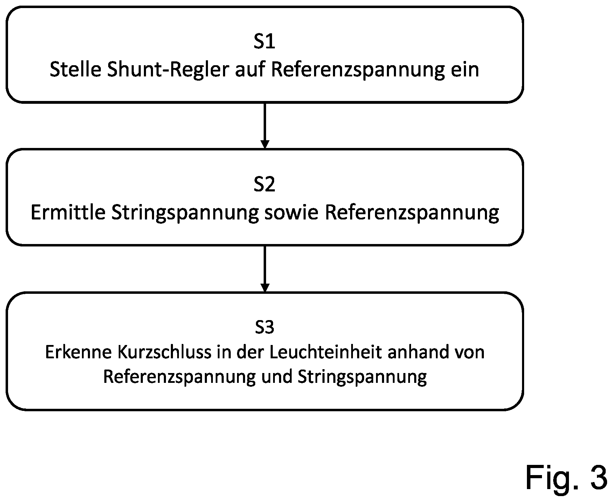

Gemäß der in Fig. 1 dargestellten Schaltungsanordnung 1 sind die Spannungsermittlungseinheit 5, die Erkennungseinheit 6, die Einstelleinheit 7, die Abschalteinheit 8 und die Signalausgabeeinheit 9 in ein Steuergerät 12 in Form eines Fahrzeugsteuergeräts integriert, in welchem ferner ein Computerprogramm 10 zur Ausführung eines später mit Bezug auf Fig. 3 beschriebenen Verfahrens installiert ist.

Im Steuergerät 12 kann die Temperaturdrift und/oder die Alterungsdrift der Leuchtdioden 3 abgelegt und bei der Ermittlung des Kurzschlusses entsprechend berücksichtigt bzw. verwendet werden.

In Fig. 2 ist ein Fahrzeug 11 mit einem Steuergerät 12 und zwei Leuchteinheiten 6 in Form von zwei Fahrzeugscheinwerfern dargestellt. Das Fahrzeug weist eine wie vorstehend beschriebene Schaltungsanordnung 1 auf, die zur Erkennung eines Kurzschlusses in einer der Leuchteinheiten 6 konfiguriert und ausgestaltet ist.

Mit Bezug auf Fig. 3 wird anschließend ein Verfahren zur Erkennung eines Kurzschlusses in der Leuchteinheit 2 mittels einer wie vorstehend beschriebenen Schaltungsanordnung 1 erläutert. Hierzu wird in einem ersten Schritt S1 zunächst der Shunt-Reglers 4 durch die Einstelleinheit 7 auf eine Referenzspannung eingestellt. Anschließend werden in einem Schritt S2 eine Stringspannung U1 der in Reihe geschalteten Leuchtdioden 3 sowie die Referenzspannung U2 des Shunt-Reglers 4 durch die Spannungsermittlungseinheit 5 ermittelt. Daraufhin kann in einem dritten Schritt S3 ein Kurzschluss in der Leuchteinheit 2 anhand der Stringspannung U1 und der Referenzspannung U2 durch die Erkennungseinheit 6 erkannt werden. Bevorzugt wird dieses Verfahren bei Leuchteinheiten mit bis zu acht in Reihe geschalteten Leuchtdioden durchgeführt. Die Referenzspannung U2 wird hierbei anhand der Durchlassspannung von einer der Leuchtdioden 3 eingestellt.

Die Erfindung lässt neben den dargestellten Ausführungsformen weitere Gestaltungsgrundsätze zu. D.h., die Erfindung soll nicht auf die mit Bezug auf die Figuren erläuterten Ausführungsbeispiele beschränkt betrachtet werden.

### Bezugszeichenliste

- 1: Schaltungsanordnung
- 2: Leuchteinheit
- 3: Leuchtdioden
- 4: Shunt-Regler
- 5: Spannungsermittlungseinheit
- 6: Erkennungseinheit
- 7: Einstelleinheit
- 8: Abschalteinheit
- 9: Signalausgabeeinheit
- 10: Computerprogramm
- 11: Fahrzeug
- 12: Steuergerät

## Patentansprüche

1. Schaltungsanordnung (1) für ein Fahrzeug (11) zur Erkennung eines Kurzschlusses in einer Leuchteinheit (2) mit mehreren in Reihe geschalteten Leuchtdioden (3), aufweisend einen Shunt-Regler (4), eine Einstelleinheit (7) zum Einstellen des Shunt-Reglers (4) auf eine Referenzspannung (U2), eine Spannungsermittlungseinheit (5) zur Ermittlung einer Stringspannung (U1) der in Reihe geschalteten Leuchtdioden (3) sowie der entsprechend eingestellten Referenzspannung (U2) des Shunt-Reglers (4), und eine Erkennungseinheit (6) zur Erkennung eines Kurzschlusses in der Leuchteinheit (2) anhand der Stringspannung (U1) und der Referenzspannung (U2).

2. Schaltungsanordnung (1) nach Anspruch 1,
**dadurch gekennzeichnet,**
**dass** die Einstelleinheit (7) zum Einstellen der Referenzspannung (U2) anhand der Durchlassspannung von einer der Leuchtdioden (3) konfiguriert ist.

3. Schaltungsanordnung (1) nach einem der voranstehenden Ansprüche,
**dadurch gekennzeichnet,**
**dass** die Schaltungsanordnung (1) eine Abschalteinheit (8) zum Abschalten der Leuchteinheit (2) anhand der Stringspannung (U1) und der Referenzspannung (U2) aufweist.

4. Schaltungsanordnung (1) nach einem der voranstehenden Ansprüche,
**dadurch gekennzeichnet,**
**dass** die Schaltungsanordnung (1) eine Signalausgabeeinheit (9) zur Ausgabe eines Warnsignals zum Abschalten der Leuchteinheit (2) anhand der Stringspannung (U1) und der Referenzspannung (U2) aufweist.

5. Verfahren zur Erkennung eines Kurzschlusses in einer Leuchteinheit (2) mit mehreren in Reihe geschalteten Leuchtdioden (3) durch eine Schaltungsanordnung (1) gemäß einem der voranstehenden Ansprüche, aufweisend die Schritte:
- Einstellen des Shunt-Reglers (4) auf eine Referenzspannung (U2) durch die Einstelleinheit (7),
- Ermitteln einer Stringspannung (U1) der in Reihe geschalteten Leuchtdioden (3) sowie der Referenzspannung (U2) des Shunt-Reglers (4) durch die Spannungsermittlungseinheit (5), und
- Erkennen eines Kurzschlusses in der Leuchteinheit (2) anhand der Stringspannung (U1) und der Referenzspannung (U2) durch die Erkennungseinheit (6).

6. Verfahren nach Anspruch 5,
**dadurch gekennzeichnet,**
**dass** die Referenzspannung (U2) anhand der Durchlassspannung von einer der Leuchtdioden (3) eingestellt wird.

7. Verfahren nach einem der Ansprüche 5 bis 6,
**dadurch gekennzeichnet,**
**dass** die Leuchteinheit (2) anhand der Stringspannung (U1) und der Referenzspannung (U2) durch eine Abschalteinheit (8) abgeschaltet wird.

8. Verfahren nach einem der Ansprüche 5 bis 7,
**dadurch gekennzeichnet,**
**dass** anhand der Stringspannung (U1) und der Referenzspannung (U2) ein Warnsignal zum Abschalten der Leuchteinheit (2) durch eine Signalausgabeeinheit (9) ausgegeben wird.

9. Computerprogramm (10), umfassend Befehle, die bei der Ausführung des Computerprogramms (10) durch einen Computer diesen veranlassen, das Verfahren nach einem der Ansprüche 5 bis 8 durchzuführen.

10. Speichermittel mit einem darauf gespeicherten Computerprogramm (10) nach Anspruch 9.

11. Fahrzeug (11) mit wenigstens einer Leuchteinheit (3) und einer Schaltungsanordnung (1) nach einem der Ansprüche 1 bis 4, die zur Erkennung eines Kurzschlusses in der Leuchteinheit (2) konfiguriert und ausgestaltet ist, wobei die Leuchteinheit (2) in Form eines Fahrzeugscheinwerfers ausgestaltet ist.
